# EUROPÄISCHE PATENTSCHRIFT

(11) **EP 1 307 671 B1**
(45) Veröffentlichungstag und Bekanntmachung des Hinweises auf die Patenterteilung: **20.08.2008**
(21) Anmeldenummer: 01951393.6
(22) Anmeldetag: 16.06.2001
(51) Int. Cl.: F16J 15/06

(54) **DICHTUNGSANORDNUNG AN EINEM AGGREGAT**
SEALING SYSTEM FOR AN ASSEMBLY
DISPOSITIF D'ETANCHEIFICATION SUR UN MOTEUR

(30) Priorität: 08.07.2000 DE 10033348
(43) Veröffentlichungstag der Anmeldung: 07.05.2003
(73) Patentinhaber: ROBERT BOSCH GMBH, 70442 Stuttgart (DE)
(72) Erfinder: FLUCK, Tobias, 87501 Immenstadt (DE); SPIES, Philipp, 66780 Hemmersdorf (DE)
(86) Internationale Anmeldenummer: PCT/DE2001/002240
(87) Internationale Veröffentlichungsnummer: WO 2002/004845

(56) Entgegenhaltungen:
- DE-A- 19 736 431

## Beschreibung

### Stand der Technik

Die Erfindung geht aus von einer Dichtungsanordnung nach der Gattung des Patentanspruchs 1.

Es ist schon eine derartige Dichtungsanordnung bekannt (DE 195 35 235 A1, DE 19736431 A1, bei der eine Abdeckhaube eines Hydraulikaggregats am freien Rand ihrer Außenwand eine umlaufende Nut aufweist, in der eine separat spritzgeformte, gummielastische Dichtung mit Dichtlippen einliegt. Die Nut ist durch unterschiedliche hohe Nutwangen begrenzt: eine zur Außenseite der Wand gelegene Nutwange ist höher als eine innenseitige Nutwange. Die äußere Nutwange greift flächig an einer ebenen Stirnseite eines Ventilblocks des Hydraulikaggregats an. Die innere Nutwange greift mit ihrer ebenen Stirnfläche an der Dichtung an und hält deren Anlage am Ventilblock aufrecht. Während die gummielastische Dichtung den Innenraum der Abdeckhaube statisch abdichtet, soll die äußere Nutwange das Vordringen z. b. eines Dampfoder Wasserstrahls eines Hochdruckreinigungsgeräts zur Dichtung verhindern. Wegen Fertigungs- oder Montagetoleranzen ist jedoch ein flächiger Angriff der äußeren Nutwange entlang der gesamten Länge der Außenwand der Abdeckhaube nicht immer sichergestellt.

### Vorteile der Erfindung

Die erfindungsgemäße Dichtungsanordnung mit den Merkmalen des Patentanspruchs 1 hat demgegenüber den Vorteil, dass durch die Verformung des nasenförmigen Vorsprungs Toleranzen zwischen den beiden Teilen des Aggregats auf einfache Weise ausgeglichen werden können, während die keilförmige Nutwange ein Auswandern der Dichtung erschwert. Es wird also zum einen mittels des nasenförmigen Vorsprungs an der außenseitigen Nutwange ein sicherer Verschluss eines Spalts zwischen den Teilen des Aggregats gegen das Eindringen von Flüssigkeiten oder Fremdkörpern erzielt, zum anderen wird mittels der keilförmigen Nutwange die Dichtung weitgehend in der Nut zurückgehalten, so dass sie einer hohen Pressung unterworfen werden kann, was ihre Dichtwirkung unterstützt. Dennoch kann ein Teilvolumen der Dichtung die keilförmige Nutwange überwinden, damit die beiden Teile des Aggregats einander soweit angenähert werden können, damit ein Auftreffen des nasenförmigen Vorsprungs auf seine Gegenfläche erfolgt. Dabei verhindert die abgerundete Spitze an der keilförmigen Nutwange ein Abscheren des aus der Nut verdrängten Teilvolumens der Dichtung.

Durch die in den Unteransprüchen aufgeführten Maßnahmen sind vorteilhafte Weiterbildungen und Verbesserungen der im Patentanspruch 1 beschriebenen Dichtungsanordnung gegeben.

### Zeichnung

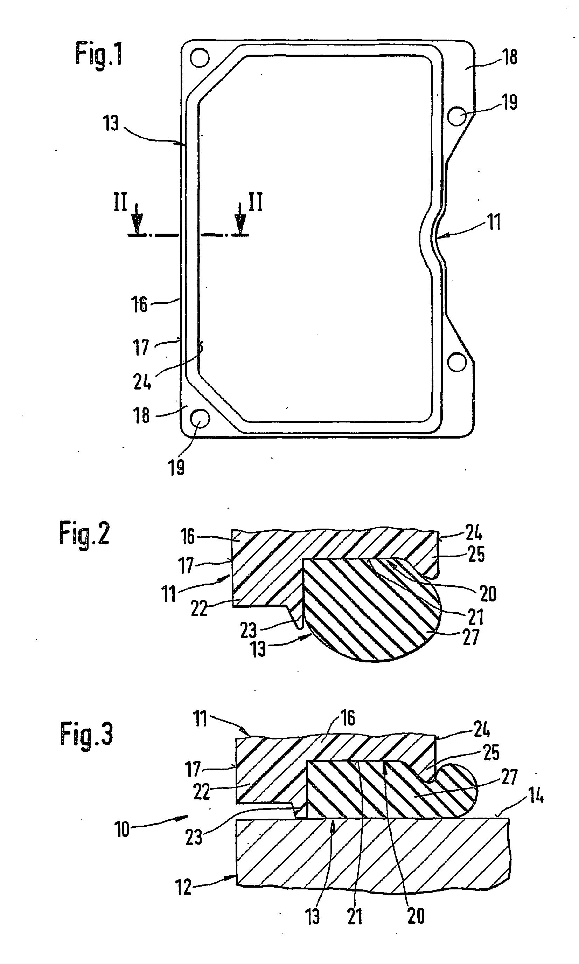

Ein Ausführungsbeispiel der Erfindung ist in der Zeichnung vereinfacht dargestellt. Es zeigen Figur 1 eine Ansicht auf einen als Deckel ausgebildeten Teil eines Aggregats mit einer stirnseitigen, umlaufenden Dichtungsanordnung, Figur 2 einen Schnitt entlang der Linie II-II in Figur 1 durch die Dichtungsanordnung des Deckels, in vergrößertem Maßstab, und Figur 3 einen Schnitt entsprechend Figur 2 mit an einem anderen Teil des Aggregats angebrachtem Deckel.

### Beschreibung des Ausführungsbeispiels

Ein in Figur 3 der Zeichnung nur abschnittsweise wiedergegebenes Aggregat 10 besteht aus zwei Teilen 11 und 12, von denen der als Deckel ausgebildete Teil 11 mit einer Dichtungsanordnung 13 versehen ist. Der andere Teil 12 des Aggregats 10 ist ein Ventilblock mit einer ebenen Fläche 14 für den Angriff der Dichtungsanordnung 13.

Der in Figur 1 vor der Montage am Teil 12 dargestellte Teil 11 hat eine umlaufende Wand 16, welche an ihrer Außenseite 17 mit flanschartigen Ansätzen 18 sowie Befestigungslöchern 19 in den Ansätzen für eine in der Zeichnung nicht wiedergegebene Verschraubung des Teils 11 am Teil 12 ausgestattet ist. Die Dichtungsanordnung 13 ist an der Stirnseite dieser Wand 16 ausgebildet. Die Wand 16 hat eine entlang der Stirnseite verlaufende, gegen den Teil 12 offene Nut 20, deren ebener Grund 21 parallel zur Fläche 14 des Teils 12 verläuft (Figuren 2 und 3). Die Nut 20 ist zur Außenseite 17 der Wand 16 hin durch eine Nutwange 22 begrenzt. Unmittelbar angrenzend an die Nut 20 ist an die Nutwange 22, ausgehend von deren freier Stirnseite, ein nasenförmiger Vorsprung 23 mit relativ schlankem Querschnitt angeformt. Der entlang dem gesamten Umfang der Wand 16 verlaufende, nasenförmige Vorsprung 23 trägt zu einem kleinen Teil an der Höhe der Nutwange 22 bzw. der Tiefe der Nut 20 bei. Auf der Innenseite 24 der Wand 16 ist die Nut 20 durch eine Nutwange 25 begrenzt, welche, ausgehend vom Grund 21, höchstens bis zur halben Nuttiefe aufragt bzw. maximal die halbe Höhe der Nutwange 22 erreicht. Die innenseitige Nutwange 22 ist im Querschnitt als Keil ausgebildet, welcher mit seinem einen Schenkel fluchtend zur Wand 16 verläuft. Die Nutwange 22 hat eine abgerundete Spitze und verläuft mit ihrem anderen Schenkel unter einem Keilwinkel von etwa 45° in den Grund 21 der Nut 20 aus. Die Nutwange 25 erstreckt sich, ebenso wie die Nutwange 22, entlang dem gesamten Umfang der Wand 16 des Teils 11, das aus einem glasfaserverstärkten Thermoplast spritzgegossen ist.

In der Nut 20 der Wand 16 ist eine umlaufend in sich geschlossene, gummielastische Dichtung 27 angeordnet. Diese besteht aus Silikonkautschuk, welcher aus einem von einem Manipulator geführten Spender in die Nut 20 eingebracht ist. Die nach dem Aushärten des Silikonkautschuks im Wesentlichen inkompressieble Dichtung 27 weist die in Figur 2 wiedergegebene Kontur auf. Die Dichtung 27 hat einen die Nut 20 ausfüllenden sowie in unbelastetem Zustand die beiden Nutwangen 22 und 25 etwa halbkreisförmig überragenden Querschnitt (Fig. 2).

Zur Montage wird das Teil 11 auf das Teil 12 aufgesetzt und mit diesem verschraubt. Während der dabei erfolgenden Annäherung des Teils 11 an die Fläche 14 des Teils 12 wird die gummielastische Dichtung 27 verformt und in Richtung auf den Grund 21 der Nut 20 zurückgedrängt. Dabei wird auch ein Teil ihres Volumens aus der Nut 20 zur Innenseite 24 der Wand 16 hin verdrängt (Figur 3). Im weiteren Verlauf der Verschraubung trifft der nasenförmige Vorsprung 23 der Nutwange 22 auf die Ebene 14 des Teils 12 auf und unterliegt einer plastischen Verformung. Die Verschraubung wird abgeschlossen, wenn sichergestellt ist, dass unter Berücksichtigung von Fertigungs- und Formtoleranzen der Vorsprung 23 unter plastischer Verformung über die gesamte Länge der Wand 16 an der Fläche 14 des Teils 12 angreift. Während des Verschraubens übt die Nutwange 25 einen sich mit Annäherung an die Fläche 14 vergrößernden Widerstand gegen das seitliche Ausweichen der Dichtung 27 aus der Nut 12 aus. Dies hat zur Folge, dass mit kleiner werdendem Abstand zwischen der Spitze der Nutwange 25 und der Fläche 14 des Teils 12 eine sich verstärkende Pressung des in der Nut 20 befindlichen Volumens der Dichtung 27 erfolgt, was deren Dichtwirkung erhöht. Dabei verhindert die Form der Nutwange 25 eine Abscheren des aus der Nut 20 verdrängten Teilvolumens der Dichtung 27.

Die Gesamtwirkung der Dichtungsanordnung 13 besteht aus zwei Einzelwirkungen: zum einen dichtet der plastisch an der Fläche 14 des Teils 12 verformte Vorsprung 23 und zum anderen die gummielastische Dichtung 27 durch Angriff an der Fläche 14 ab. Der zur Außenseite der Wand 16 gelegene Vorsprung 23 verhindert als Element der Dichtungsanordnung 13 beispielsweise das Vordringen eines Dampf- oder Wasserstrahles eines Hochdruckreinigungsgerätes zur gummielastischen Dichtung 27. Diese das zweite Element der Dichtungsanordnung 13 bildende Dichtung 27 verhindert aufgrund ihrer hohen Pressung ein Unterwandern von Flüssigkeiten oder Fremdstoffen zur Innenseite 24 der Wand 16 hin. Die Dichtungsanordnung 13 wird hohen Beanspruchungen gerecht, wie sie beispielsweise bei Aggregaten auftreten, die in einem Motorraum eines Fahrzeugs angeordnet sind.

## Patentansprüche

1. Dichtungsanordnung (13) an einem Aggregat (10), welches aus zwei Teilen (11, 12) besteht, von denen ein Teil (11) mit der Dichtungsanordnung (13) versehen ist, während der andere Teil (12) eine Fläche (14) aufweist, an der die Dichtungsanordnung (13) angreift, mit den Merkmalen:
- die Dichtungsanordnung (13) ist an der Stirnseite einer Wand (16) des einen Teils (11) ausgebildet und hat eine entlang der Stirnseite verlaufende Nut (20), welche beiderseits durch Nutwangen (22, 25) begrenzt ist,
- die zur Außenseite (17) der Wand (16) gelegene Nutwange (22) ist an der Fläche (14) des anderen Teils (12) abgestützt, während die zur Innenseite (24) der Wand (16) gelegene Nutwange (25) mit Abstand zu der Fläche (14) verläuft,
- in der Nut (20) ist eine gummielastische Dichtung (27) angeordnet, welche in unbelastetem Zustand die beiden Nutwangen (22, 25) überragt und in belastetem Zustand wenigstens annähernd bis zur außenseitigen Nutwange (22) zurückgedrängt ist,
**gekennzeichnet durch** die weiteren Merkmale:
- die außenseitige Nutwange (22) hat angrenzend an die Nut (20) einen im Querschnitt nasenförmigen Vorsprung (23), der unter plastischer Verformung an der Fläche (14) des anderen Teils (12) angreift,
- die innenseitige Nutwange (25) ist im Querschnitt als Keil ausgebildet, der eine abgerundete Spitze hat und unter seinem Keilwinkel in einen eben ausgebildeten Grund (21) der Nut (20) ausläuft.

2. Dichtungsanordnung nach Anspruch 1, **dadurch gekennzeichnet, dass** die Dichtung (27) im Wesentlichen inkompressibel ist und einen die Nut (20) ausfüllenden sowie die beiden Nutwangen (22, 25) wenigstens annähernd halbkreisförmig überragenden Querschnitt hat.

3. Dichtungsanordnung nach Anspruch 2, **dadurch gekennzeichnet, dass** die Dichtung (27) aus Silikonkautschuk besteht.

4. Dichtungsanordnung nach Anspruch 1, **dadurch gekennzeichnet, dass** die innenseitige Nutwange (25) höchstens bis zur halben Nuttiefe vom Grund (21) der Nut (20) aufragt.

5. Dichtungsanordnung nach Anspruch 1 oder 4, **dadurch gekennzeichnet, dass** der Grund (21) der Nut (20) wenigstens annähernd parallel zu der Fläche (14) des anderen Teils (12) verläuft.

## Claims

1. Sealing system (13) for an assembly (10) which comprises two parts (11, 12), one part (11) of which is provided with the sealing system (13) while the other part (12) has a surface (14) on which the sealing arrangement (13) acts, with the following features:
- the sealing system (13) is formed on the end side of a wall (16) of the one part (11) and has a groove (20) which runs along the end side and is bounded on both sides by groove cheeks (22, 25),
- the groove cheek (22) situated towards the outer side (17) of the wall (16) is supported on the surface (14) of the other part (12) while the groove wall (25) situated towards the inner side (24) of the wall (16) runs at a distance from the surface (14),
- a rubber-elastic seal (27) is arranged in the groove (20) and, in the unloaded state, protrudes above the two groove cheeks (22, 25) and, in the loaded state, is forced back at least approximately as far as the outer groove cheek (22),
**characterized by** the following further features:
- the outer groove cheek (22) has, adjacent to the groove (20), a projection (23) which is lug-shaped in cross section and, with plastic deformation, acts on the surface (14) of the other part (12),
- the inner groove cheek (25) is designed in cross section as a wedge which has a rounded tip and peters out below its wedge angle into a flat base (21) of the groove (20).

2. Sealing system according to Claim 1, **characterized in that** the seal (27) is essentially incompressible and has a cross section which fills the groove (20) and protrudes at least approximately in semicircular form above the two groove cheeks (22, 25).

3. Sealing system according to Claim 2, **characterized in that** the seal (27) is composed of silicone rubber.

4. Sealing system according to Claim 1, **characterized in that** the inner groove cheek (25) rises up from the base (21) of the groove (20) at most to half the groove depth.

5. Sealing system according to Claim 1 or 4, **characterized in that** the base (21) of the groove (20) runs at least approximately parallel to the surface (14) of the other part (12).

## Revendications

1. Dispositif d'étanchéité (13) appliqué à un ensemble (10) se composant de deux parties (11, 12) dont une partie (11) est munie du dispositif d'étanchéité (13) alors que l'autre partie (12) présente une surface (14) avec laquelle coopère le dispositif d'étanchéité (13), comprenant les caractéristiques suivantes :
- le dispositif d'étanchéité (13) est réalisé sur la face frontale d'une paroi (16) d'une première partie (11) et comporte une rainure (20) suivant la face frontale, cette rainure étant délimitée des deux côtés par des parois de rainure (22, 25),
- la paroi de rainure (22) située sur le côté extérieur (17) de la paroi (16) est appuyée contre la surface (14) de l'autre partie (12) alors que la paroi de rainure (25) située du côté intérieur (24) de la paroi (16) est à une distance de la surface (14),
- un joint élastique comme du caoutchouc (27) est placé dans la rainure (20), et à l'état non sollicité ce joint déborde des deux parois de rainure (22, 25) et à l'état sollicité, il est repoussé au moins sensiblement jusque vers la paroi extérieure (22) de la rainure,
**caractérisé par** les caractéristiques suivantes :
- la paroi de rainure (22) côté extérieur présente de façon adjacente à la rainure (20), une partie en saillie (23) à section en forme de bec, qui s'applique sous déformation plastique contre la surface (14) de l'autre partie (12),
- en section la paroi de rainure (25) côté intérieur a une forme de coin munie d'une pointe arrondie et qui se termine par un angle de coin par un fond plan (21) de la rainure (20).

2. Dispositif d'étanchéité selon la revendication 1,
**caractérisé en ce que**
le joint (27) est pratiquement incompressible et sa section remplit la rainure (20) et déborde des deux parois de rainure (22, 25) au moins sensiblement selon un demi-cercle.

3. Dispositif de joint selon la revendication 2,
**caractérisé en ce que**
le joint (27) est en caoutchouc de silicone.

4. Dispositif de joint selon la revendication 1,
**caractérisé en ce que**
la paroi côté intérieur (25) de la rainure remonte au plus jusqu'à la moitié de la profondeur de la rainure à partir du fond (21) de la rainure (20).

5. Dispositif d'étanchéité selon la revendication 1 ou 4,
**caractérisé en ce que**
le fond (21) de la rainure (20) est au moins sensiblement parallèle à la surface (14) de l'autre pièce (12).
